(19) Europäisches Patentamt
European Patent Office
Office européen des brevets

(11) Publication number: 0 018 146
B1

# (12) EUROPEAN PATENT SPECIFICATION

(45) Date of publication of patent specification: 05.10.83

(21) Application number: 80301090.9

(22) Date of filing: 03.04.80

(51) Int. Cl.[3]: C 09 C 3/08, C 09 C 1/36, C 09 B 67/08 //(C09C3/08, C07C91/02, C07F3/06), (C09C3/08, C07C91/02, C07F5/06)

## (54) Pigments having polymeric amine metallate coatings, process for their preparation and surface coating composition containing these coated pigments.

(30) Priority: 04.04.79 US 27026

(43) Date of publication of application:
29.10.80 Bulletin 80/22

(45) Publication of the grant of the patent:
05.10.83 Bulletin 83/40

(84) Designated Contracting States:
BE DE FR GB

(56) References cited:
DE - A - 1 767 782
DE - A - 2 046 739
DE - A - 2 249 678
US - A - 2 985 685
US - A - 3 669 896
US - A - 3 702 773
US - A - 3 942 999

(73) Proprietor: E.I. DU PONT DE NEMOURS AND COMPANY
Legal Department 1007 Market Street
Wilmington Delaware 19898 (US)

(72) Inventor: Jacobson, Howard Wayne
2009 Longcome Drive
Wilmington Delaware 19810 (US)

(74) Representative: Woodcraft, David Charles et al,
BROOKES & MARTIN High Holborn House 52/54
High Holborn
London, WC1V 6SE (GB)

EP 0 018 146 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Pigments having polymeric amine metallate coatings, process for their preparation and surface coating composition containing these coated pigments

This invention relates to a pigment substrate coated with a polymeric amine metallate and a process for preparing such coated substrates. More specifically, this invention relates to the preparation of a pigment having a coating of polymeric amine zincate or aluminate.

Triethanolamine aluminate (TEAAL) in monomeric form is disclosed in U.S.—A 2,985,685. A process for preparing TEAAL and the use of it as an ester redistribution catalyst is also disclosed.

In the field of pigments, the application of coatings of various metal oxides, including alumina, to $TiO_2$ in order to modify the properties of the pigment is known. The present invention is based on the discovery that coating of pigments with certain polymeric amine metallates can modify the properties of the pigment in advantageous ways.

According to the present invention, there is provided a pigment having a coating which comprises a polymeric amine metallate of the general formula (a):—

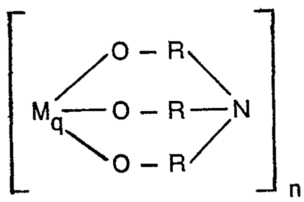

(a)

where R is an alkylene radical of from 2—6 carbon atoms, n is an integer of 4—6, M is aluminium or zinc and q is 1 when M is aluminium and q is 3/2 when M is zinc or (b):—

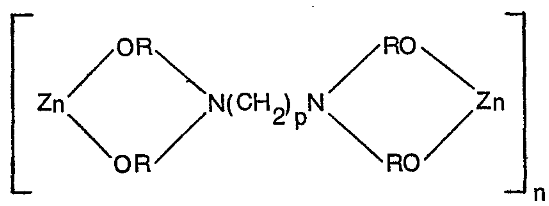

(b)

or (c) :–

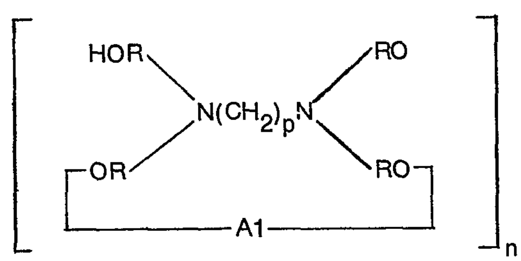

(c)

where p is an integer from 2—5 and n and R are as defined above, the coating being present in an amount sufficient to enhance the gloss of the uncoated pigment and in an amount of not more than 2% by weight calculated as metal oxide and based on the weight of the base pigment.

Conveniently, for example, the metallate may be one of formula (a) or formula (c), R in either case being ethylene.

In a second pigment, the invention provides a process for preparing a pigment having high gloss when applied in a paint vehicle to a substrate, which process comprises coating the pigment particles with a polymeric amine metallate according to the invention by contact of the pigment with either the pre-formed metallate or its precursors and exposing the so-treated pigment to a temperature of from 50—350°C.

The polymeric amine metallates can be prepared by reacting an aluminum or zinc compound with the appropriate amine. The polymer is formed when the metallate is formed. The amine metallates will polymerize very readily under the conditions prevailing during the reaction of the amines with the aluminum or zinc compounds. The polymerization is slow at room temperature and much faster, e.g., at 80°C.

The amine metallates are conveniently prepared by reacting aluminum isopropoxide or a zinc compound with an alkanolamine corresponding to the desired ester. U.S. Patent 2,985,685 describes such preparation where the metal is aluminum.

Aluminum isopropoxide (AlPO), $Al(OCH(CH_3)_2)_3$, is a white solid with a melting point of 118°C. It is soluble in alcohols and hydrocarbons. It can be hydrolyzed in alumina hydrates or converted to alumina on further heating. It is produced commercially from the reaction of isopropyl alcohol and Al under reflux conditions.

The zinc compounds employed in preparing the amine zincates include zinc acetate, zinc isopropoxide and zinc alcoholate wherein the alcohol radical has 1—3 carbon atoms. Representative examples of such zinc compounds include zinc isopropoxide, zinc acetate, zinc ethanolate and zinc propionate. The preferred zinc compound is zinc acetate.

The alkanolamines which are reacted with the zinc or aluminum compound are of the general formulae

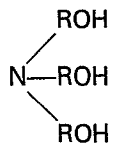

or

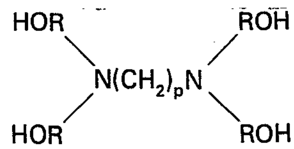

where R is 1—6 carbon atoms and p is an integer of 1—5. Preferably, R is 2 to 6 carbon atoms.

Representative examples of the alkanolamines used in the preparation of the coated pigments of the present invention include triethanolamine (referred to herein as TEA), tripropanolamine, triisopropanolamine and N,N,N',N'-tetrakis(2-hydroxypropylethylenediamine) (referred to herein as Quadrol).

Polymeric triethanolamine aluminate (TEAAL) is one of the preferred coating materials and can be prepared by reacting a mixture of TEA and AlPO in dry toluene, refluxing for one hour under $N_2$, stripping off the isopropyl alcohol generated, cooling the toluene/TEAAL and filtering. The product is a white powder. The following equations illustrate the reaction:

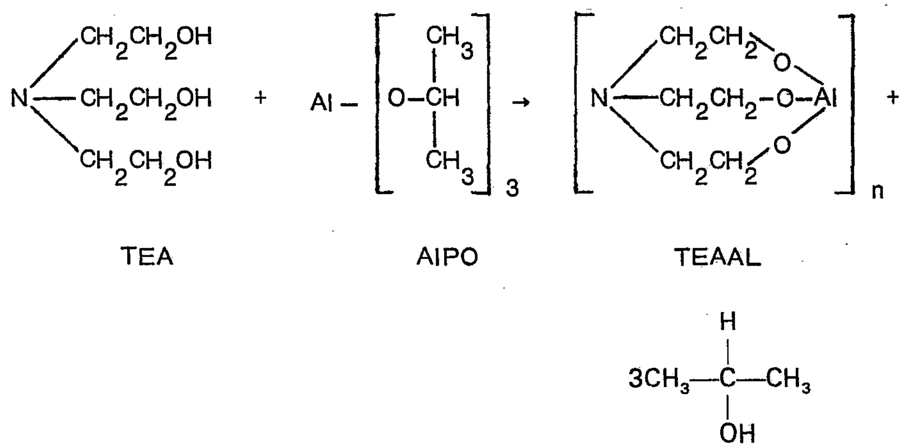
TEA AlPO TEAAL

$$TEA + 3/2[Zn(Ac)_2] \rightarrow \text{triethanolamine zincate} + 3HAc$$

or

$$3/2[Zn(propionate)_2]$$

Among the preferred precursors of the polymeric amines are TEA and AlPO.

The coatings applied to the pigment substrate will normally constitute at least about 0.17 wt %, calculated as metal oxide of the pigment substrate, preferably from 0.17% to 2%. Thus, for example, in the case of the above two precursors, the stoichiometric amount of AlPO may be reacted with the TEA, the amount in total of reactants employed being such that the coating, measured in $Al_2O_3$, is 0.17% by weight based on the substrate. However, more than the stoichiometric amount of AlPO is preferred. When the stoichiometric amount of AlPO is reacted with TEA, the total $Al_2O_3$ in the coating is 30% by weight of the metallate.

Polymeric Quadrol aluminate may be prepared by dissolving Quadrol/AlPO in toluene, refluxing for one hour under $N_2$, stripping off the isopropyl alcohol, and cooling and filtering. It is a glassylike crystalline compound.

Polymeric Quadrol aluminate is formed by the reaction between Quadrol and AlPO.

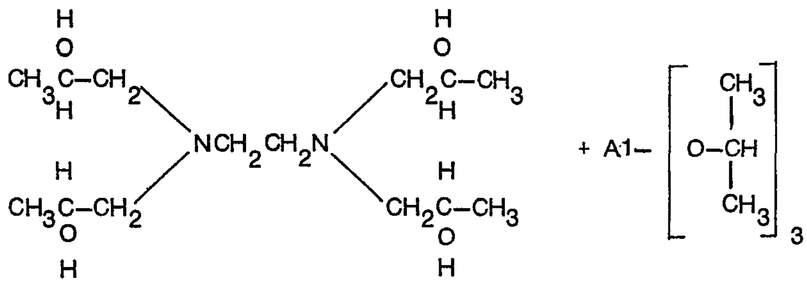

Quadrol AIPO

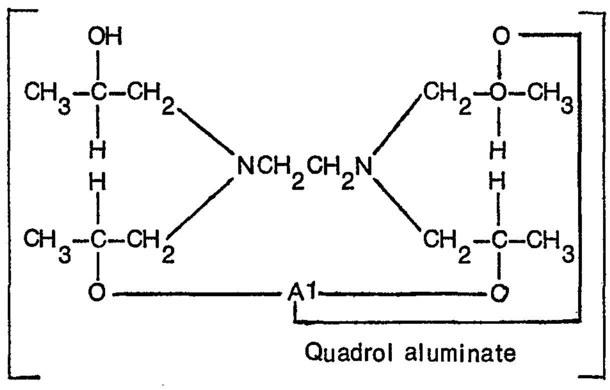

Quadrol aluminate

Quadrol + $2Zn(Ac)_2 \rightarrow$ [Quadrol—2Zn] + 4HAc.

(Quadrol zincate)

The product of Quadrol and AIPO, namely, Quadrol aluminate, like the TEAAL is readily polymerized. Polymer Quadrol aluminate forms at the conditions under which the Quadrol and the AIPO react.

The polymeric amine metallate coating can be achieved by coating a substrate directly with said polymeric coating under conditions described herein or it may be achieved in situ by coating the substrate with the precursors of the polymeric amine metallate.

What is meant by the precursors of the polymeric amine metallates is the amine and the aluminium or zinc compound eg., AIPO and TEA or AIPO and Quadrol.

The conditions for attaching the polymer or the product of the precursors of this invention to form the substrate are conveniently present in a fluid energy mill. However, any apparatus may be used for coating a substrate as long as the conditions are similar to those present in the fluid energy mill. Particular fluid energy mills that can be used to carry out the process of the invention are described in U.S.—A 2032827; 3462086; 3726484 and 3840188. Such mills are normally used to simultaneously dry and grind pulverulent solids. Superheated steam at temperatures of from 150—350°C can be used to attach the polymeric amine to the substrate in the fluid energy mill (however, more broadly, the substrate may be coated with the polymeric amine at temperatures of from 50—350°C — a temperature of 200—250°C is preferred when a fluid energy mill is used) and since the polymer precursors may be reacted at such temperature, a particular embodiment of the invention is a process which comprises mixing the precursors of the polymeric amine metallate with the pigment in a fluid energy mill at a temperature of from 150—350°C to react said precursors together and form a polymeric metallate. Alternatively, of course, the pigment may be coated with the polymeric amine metallate by mixing said polymer with the pigment in a fluid energy mill in the presence of steam at a temperature of from 150—350°C.

The invention is especially useful in the coating of inorganic oxide pigments, quinacridone pigments and metal phthalocyanines. For example, in the preparation of $TiO_2$ with the polymeric amine metallate coating a surprisingly higher gloss results than where the coating is alumina. Even higher results of gloss are obtained when sufficient AIPO is used to give a total of at least 0.5% by weight of $Al_2O_3$ in the coating based on the pigment.

The pigment substrates may be in particulate form or fibrous form. Particulate substrates are frangible particles and aggregates of particles that are not frangible. Fibrous substrates include fibrous $TiO_2$.

The base pigment is conveniently rutile titanium dioxide having a surface area of at least 1 $m^2/g.$, in such case the coated pigment preferably having a surface area not more than 10% greater than the surface area of the base pigment.

In a fluid energy mill particles of the particulate substrate are conveyed in a plurality of streams from jets by a gaseous fluid such as superheated steam into the outer portion of an inwardly spiraling vortex at high velocity and in a manner which will maintain the vortex at a high rotative speed and a relatively small inward speed to cause the pigment particles to rub or strike against each other or against breaker plates within the mill. The superheated steam causes the polymer to become tacky and thus become attached to the particulate substrate as a surface coating. The preferred conditions of this invention involve the use of excess AlPO. The steam hydrolyzes this excess AlPO to form an extremely fine particulate alumina. This alumina is embedded in the tacky polymer when exposed to superheated steam of from 150—350°C. Alumina also results from hydrolysis of the polymer by the steam.

The polymeric amine metallates may be attached to the substrate by dissolving the polymeric amine metallate in a solvent and coating the substrate with this dissolved metallate. In this method, it is not necessary to use superheated steam. Merely evaporating the solvent is sufficient to attach the polymer to the substrate. Thus, generally a temperature of from 50—350°C can be used in the process of this invention. In this method of operation, small amounts of water are required to hydrolyze any excess AlPO to alumina.

## Examples

The Examples that follow further illustrate the invention.

### Example 1

3632 Grams of rutile $TiO_2$ pigment were blended with 71 g of aluminum isopropoxide dissolved in 200 cc of isopropyl alcohol at a temperature of 50°C for 1 hour in a Patterson-Kelley Model LB—7280 Liquid-Solids Blender. This was followed by 30 minutes of blending with a solution of 15 g of triethanolamine dissolved in 100 cc of isopropyl alcohol.

The blended pigment/TEA/AlPO system was dried for 12 hours at 110°C to remove the alcohol.

As a control, 3.62 Kg of rutile $TiO_2$ pigment was blended with 15 g of triethanolamine dissolved in 100 cc of isopropyl alcohol for 30 minutes and dried for 12 hours at 110°C.

Both the $TiO_2$/TEA/AlPO and the control were steam treated in an 8″ (20.3 cms) fluid energy mill operated at 550°F (288°C) at a steam/pigment ratio of 3/1. The products were evaluated in an alkyd paint system as was a reference standard.

| | Surface Area $m^2/g$ | 30J Gloss | Relative Hiding Power |
|---|---|---|---|
| Standard: $TiO_2$ coated with 3% alumina | 10 | 69 | 100 |
| Ex 1 (0.5% $Al_2O_3$ based on AlPO) | 6.2 | 80 | 109 |
| Control | 5.5 | 68 | 95 |

### Example 2

3632 Grams of $TiO_2$ pigment were blended with 15 g of TEA dissolved in 50 cc of isopropyl alcohol in a Patterson-Kelley Model LB—7280 Liquid-Solids Blender for 30 minutes. 71 Grams of AlPO dissolved in 150 cc of isopropyl alcohol are added to the blender. After an additional 30 minutes of blending, the pigment/TEA/AlPO was placed in a tray, dried free of alcohol, sieved and fluid energy milled in an 8″ (20.3 cms) fluid energy mill at a ratio of steam to pigment of 3:1.

The total alumina as $Al_2O_3$ in the coating based on the pigment was 0.5% by weight. The coating was polymerized TEAAL with an average molecular weight of 840 and consisted of 17.3 g of TEAAL and 12.5 g of $Al_2O_3$.

The data obtained is summarized in the table below.

### Example 3

The procedure of Example 2 was followed except that 142 g of AlPO in 300 cc of isopropyl alcohol were used and the alumina as $Al_2O_3$ was 1% by weight based on the pigment. The polymerized coating was 17.3 g of TEAAL and 29.9 g of $Al_2O_3$.

The data obtained is summarized in the table below.

### Example 4

The procedure of Example 2 was followed except that 284 g of AlPO and 600 cc of isopropyl alcohol were used and the alumina as $Al_2O_3$ was 2% by weight based on the pigment. The polymerized coating was 17.3 g TEAAL and 64.6 g of $Al_2O_3$.

The data obtained is summarized in the table below.

Example 5

The procedure of Example 2 was followed except that 30 g of acetate was substituted for the AlPO in the form of a 25% by weight aqueous solution and the TEA was dissolved in 50 cc of water. The Zn as ZnO was 0.3% by weight based on the pigment. The polymerized coating was 21 g triethanolamine zincate.

The data obtained is summarized in the table below.

Example 6

The procedure of Example 2 was followed except that 21.9 g of Quadrol was substituted for the TEA and 142 g of AlPO were used. The alumina in the coating as $Al_2O_3$ was 1% by weight based on the pigment. The coating was 23.8 g of Quadrol aluminate and 31 g of $Al_2O_3$.

The data obtained is summarized in the table below.

Example 7

The procedure of Example 2 was followed except that 21.9 g of Quadrol was substituted for the TEA, 50 cc of water were used to dissolve the Quadrol and 33 g of zinc acetate were used in place of AlPO and made into a 25% solution in water. The polymeric coating was 31.4 g of Quadrol zincate.

The data obtained is summarized in the table below.

| Example | Surface Area* $m^2/g$ | 30J Gloss | Relative Hiding Power |
|---|---|---|---|
| 2 | 6.2 | 80 | 109 |
| 3 | 8.6 | 80 | 106 |
| 4 | 12.7 | 78 | 109 |
| 5 | 4.9 | 78 | — |
| 6 | 6.4 | 80 | 106 |
| 7 | — | 73 | 100 |

*Surface area by the standard B.E.T. method.

Examples 8—11

The procedures of Examples 2 or 5 were followed depending on whether AlPO or zinc acetate was used with the amounts indicated below:

| Examples | $TiO_2$ grams | Quadrol grams | TEA grams | AlPO grams | $Zn(Ac)_2$ grams | Metal Oxide in Polymeric Coating |
|---|---|---|---|---|---|---|
| 8 | 3632 | 35 | — | 24.6 | — | 1% |
| 9 | 3632 | — | 30 | 61 | — | 1% |
| 10 | 3632 | — | 22.5 | — | 50 | 1% |
| 11 | 3632 | 29.2 | — | — | 33.3 | 1% |

The coated $TiO_2$ was dispersed in the plastic indicated below and the data obtained is shown below:

| Examples | Flexible Vinyl Chloride Polymer Tinting Strength | Brightness | Yellowness Index |
|---|---|---|---|
| 8 | 101.8 | 89.3 | 6.9 |
| 9 | 102.4 | 89.7 | 6.1 |
| 10 | 100 | 89.7 | 5.7 |
| 11 | 101.2 | 88.9 | 6.0 |
| Control | 99 | 88.0 | 5.3 |

| Examples | Polyethylene Brightness | Yellowness Index |
|---|---|---|
| 8 | 90.2 | 4.7 |
| 9 | 90.4 | 2.8 |
| 10 | 90.2 | 2.7 |
| 11 | 89.4 | 3.4 |
| Control | 89.4 | 3.3 |

Brightness is the Green Filter Reflectance. Yellowness Index is the Red Filter Reflectance-Blue Filter Reflectance divided by Green Filter Reflectance times 100 as determined by using a Hunter reflectometer.

30J Gloss was determined in the following manner: A starting composition or mill base was prepared by manually mixing 387.0 g of the $TiO_2$ pigment to be tested with 149.6 g of an alkyd resin (a commercial resin sold by Celanese Coatings Co. under the Registered Trade Mark "Syntex" 3145, 60% N.V.), 9.4 g of butanol and 79.0 g of a commercially available aromatic solvent (sold by Esso Standard Oil under the name "Xylol"). The mixture was then placed in a container, inserted in a machine equipped with a sand grinding disc and 700 g of sand were added at a rotation speed of 500 rpm. After adding all the sand, grinding was continued for 5 minutes at 2750 rpm. The mill base was isolated from the sand by filtration through coarse and fine strainers.

The mill base was reduced by mixing 100 g of the mill base with 1.4 g of a commercially available aromatic solvent ("Xylol") Registered Trade Mark, 71.8 g of alkyd resin ("Syntex" 3145), 38.5 g of a 55% solids crosslinking melamine resin (a commercial resin sold by American Cyanamid under the Registered Trade Mark "Cymel" 248—8), 12.0 g of naphtha and 1.0 g of butanol. The resultant mixture constituted the finished paint formulation. In order to prepare the paint for spraying, additional "Xylol" was added to a given weight of the paint so that 50 ml flowed through a 10 F viscosity cup in 16 seconds.

The reduced paint was sprayed onto an aluminum panel to visual hiding, i.e, a film thickness of about 1.2 mils. The panel was flashed or allowed to stand for 10 minutes at room temperature to allow the volatile components to evaporate and was then baked for 45 minutes at 149°C.

The panels were allowed to cool, then placed on a gloss meter set at an angle of 20° and the gloss was read directly from the gloss meter.

The polymeric amine metallate coatings of this invention give the pigment substrate unusual and unexpected properties. Pigments coated with said polymeric metallates displayed improved gloss in paint systems and improved dispersibility in plastics.

## INDUSTRIAL APPLICABILITY

The polymeric amine metallates are useful in industry to enhance properties of the coated substrate. For example, coated $TiO_2$ has improved gloss in paint systems and better dispersibility in plastics.

**Claims**

1. A pigment having a coating which comprises a polymeric amine metallate of the general formula (a):—

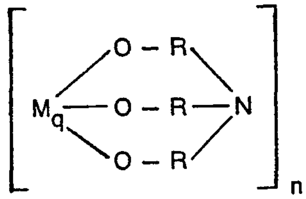

(a)

wherein R is an alkylene radical of from 2—6 carbon atoms, n is an integer of 4—6, M is aluminium or zinc and q is 1 when M is aluminium and q is 3/2 when M is zinc or (b):—

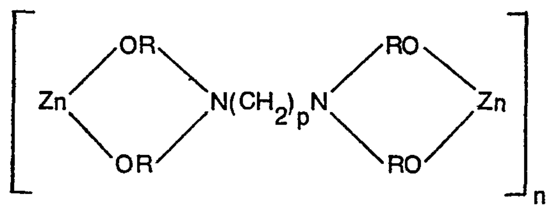

(b)

or (c):–

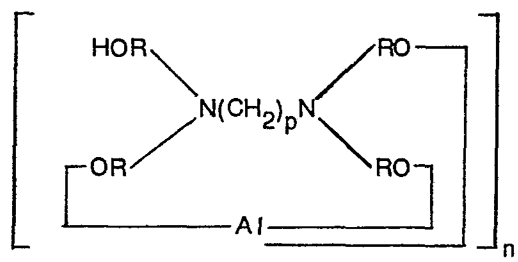

(c)

where p is an integer from 2—5 and n and R are as defined above, the coating being present in an amount sufficient to enhance the gloss of the uncoated pigment and in an amount of not more than 2% by weight calculated as metal oxide and based on the weight of the base pigment.

2. A coated pigment according to Claim 1 wherein the base pigment is rutile $TiO_2$.

3. A coated pigment according to Claim 2 wherein the base pigment has a surface area of at least $1 m^2/g$.

4. A coated pigment according to Claim 3 which has a surface area no more than 10% greater than the surface area of the base element.

5. A rutile $TiO_2$ pigment having a coating which comprises a polymeric amine metallate as defined in Claim 1, the coating being present in an amount from 0.17% to 2% calculated as metal oxide and based on the weight of the rutile $TiO_2$.

6. A process for preparing a pigment having high gloss when applied in a paint vehicle to a substrate, which process comprises coating the pigment particles with a polymeric amine metallate as defined in Claim 1 by contact of the pigment with either the pre-formed metallate or its precursors and exposing the so-treated pigment to a temperature of from 50—350°C.

7. A process according to Claim 6, wherein the metallate is of formula (c) or of formula (a) in which M is aluminium and in either case the metallate is one in which R is ethylene.

8. A process according to Claim 6 or Claim 7, wherein a precursor of the polymeric amine metallate is aluminium isopropoxide and this is present in stoichiometric excess with respect to the amine.

9. A process according to any one of Claims 6 to 8 wherein the pigment is coated with the polymeric amine metallate by mixing the precursors of the polymeric amine metallate with the pigment in a fluid energy mill at a temperature of from 150—350°C to react said precursors together and form a polymer metallate as defined in Claim 1 attached to the substrate pigment.

10. A process according to any one of Claims 6 to 9 wherein the pigment is coated with the polymeric amine metallate by mixing said polymer with the pigment in a fluid energy mill in the presence of steam at a temperature of from 150—350°C.

11. A surface coating composition which comprises a continuous phase containing a film forming polymer and a pigment dispersed therein, the pigment comprising a coated pigment as claimed in any one of Claims 1 to 5.

**Patentansprüche**

1. Pigment mit einem Überzug, der enthält: ein polymeres Aminmetallat der allgemeinen Formel (a):—

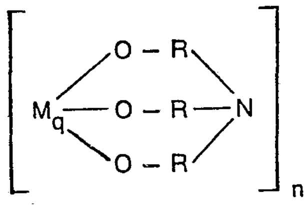

(a)

worin R einen Alkylenrest mit 2—6 Kohlenstoffatomen bedeutet, n eine ganze Zahl von 4—6 ist, M Aluminium oder Zink ist und q 1 ist, wenn M Aluminium ist und q 3/2 ist, wenn M Zink ist oder (b):—

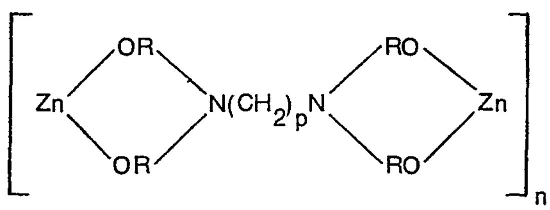

(b)

oder (c):—

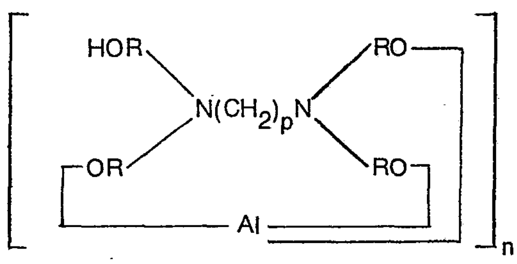

(c)

worin p eine ganze Zahl von 2—5 ist und n und R wie vorstehend definiert sind, wobei der Überzug in einer ausreichenden Menge vorhanden ist, um den Glanz des nicht überzogenen Pigments zu erhöhen, und in einer Menge von nicht mehr als 2 Gew.-%, berechnet als Metalloxid und basierend auf dem Gewicht des Basispigments.

2. Überzogenes Pigment nach Anspruch 1, in dem das Basispigment Rutil, $TiO_2$, ist.

3. Überzogenes Pigment nach Anspruch 2, worin das Basispigment eine spezifische Oberfläche von mindestens 1 $m^2/g$ aufweist.

4. Überzogenes Pigment nach Anspruch 3, mit einer spezifischen Oberfläche von nicht mehr als 10% größer als die spezifische Oberfläche des Basispigments.

5. Rutil-$TiO_2$-Pigment mit einem Überzug, der ein polymeres Aminmetallat enthält, wie in Anspruch 1 definiert, wobei der Überzug in einer Menge von 0,17% bis 2%, berechnet als Metalloxid und basierend auf dem Gewicht des Rutils $TiO_2$ vorhanden ist.

6. Verfahren zur Herstellung eines Pigments mit hohem Glanz bei Auftrag in einem Anstrichmittel-Vehikel, auf ein Substrat, bei dem die Pigmentteilchen mit einem polymeren Aminmetallat, wie in Anspruch 1 definiert, überzogen werden, durch Kontakt des Pigments mit entweder dem vorgebildeten Metallat oder seinen Vorläufern und Erwärmen des so behandelten Pigments auf eine Temperatur von 50—350°C.

7. Verfahren nach Anspruch 6, bei dem das Metallat die Formel (c) oder die Formel (a) aufweist, worin M Aluminium ist und es sich in jedem Falle um ein Metallat handelt, worin R Ethylen ist.

8. Verfahren nach Anspruch 6 oder Anspruch 7, bei dem ein Vorläufer des polymeren Aminmetallats Aluminiumisopropoxid ist und dieses in stöchiometrischem Überschuß bezogen auf das Amin vorhanden ist.

9. Verfahren nach einem der Ansprüche 6—8, bei dem das Pigment mit dem polymeren Aminmetallat überzogen wird durch Vermischen der Vorläufer des polymeren Aminmetallats mit dem Pigment in einer Fluid-Energie-Mühle bei einer Temperatur von 150—350°C, um die Vorläufer miteinander umzusetzen und ein polymeres Metallat, wie in Anspruch 1 definiert, anhaftend an dem Substratpigment, zu bilden.

10. Verfahren nach einem der Ansprüche 6—9, bei dem das Pigment mit dem polymeren Aminmetallat durch Vermischen des Polymeren mit dem Pigment in einer Fluid-Energie-Mühle in Anwesenheit von Dampf bei einer Temperatur von 150—350°C überzogen wird.

11. Oberflächenüberzugszusammensetzung, enthaltend eine kontinuierliche Phase, die ein filmbildendes Polymeres und ein darin dispergiertes Pigment enthält, wobei das Pigment ein überzogenes Pigment, gemäß einem der Ansprüche 1—5 umfaßt.

## Revendications

1. Pigment portant un revêtement qui comprend un métallate d'amine polymère de la formule générale (a):

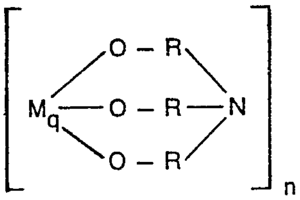

(a)

dans laquelle R est un radical alkylène de 2 à 6 atomes de carbone, *n* est un nombre entier de 4 à 6, M est l'aluminium ou le zinc et *q* vaut 1 quand M est l'aluminium et *q* vaut 3/2 quand M est le zinc, ou (b):

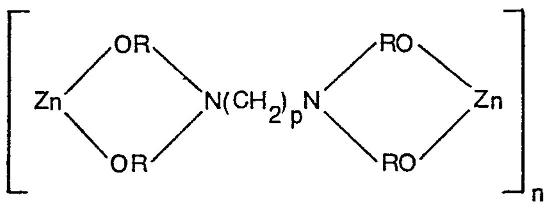

(b)

ou (c):—

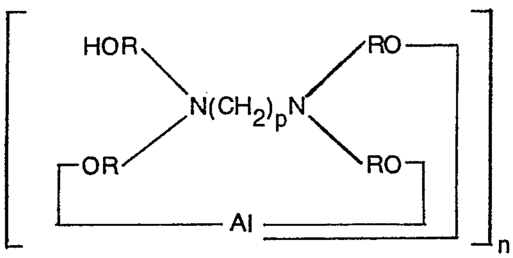

(c)

dans lesquelles *p* est un nombre entier de 2 à 5 et *n* et R sont tels que définis ci-dessus, le revêtement étant présent en quantité suffisante pour augmenter le brillant du pigment non revêtu et en quantité ne dépassant pas 2% en poids, calculé en oxyde de métal et relativement au poids du pigment.

2. Pigment revêtu selon la revendication 1, dans lequel le pigment est le $TiO_2$ rutile.

3. Pigment revêtu selon la revendication 2, dans lequel le pigment de base a une surface spécifique d'au moins 1 $m^2/g$.

4. Pigment revêtu selon la revendication 3, qui a une surface spécifique qui n'est pas supérieure de plus de 10% à la surface spécifique du pigment de base.

5. Pigment $TiO_2$ rutile portant un revêtement qui comprend un métallate d'amine polymère tel que défini à la revendication 1, le revêtement étant présent à raison de 0,17 à 2%, calculé en oxyde de métal et relativement au poids du $TiO_2$ rutile.

6. Procédé de préparation d'un pigment présentant un grand brillant lorsqu'on l'applique à un subjectile dans un véhicule pour peintures, procédé qui consiste à revêtir les particules de pigment d'un métallate d'amine polymère tel que défini à la revendication 1, par contact du pigment soit avec le métallate préformé soit avec ses progéniteurs et exposition du pigment ainsi traité à une température de 50 à 350°C.

7. Procédé selon la revendication 6, dans lequel le métallate est de formule (c) ou de formule (a) dans laquelle M est l'aluminium, le métallate étant, dans un cas comme dans l'autre, un métallate dans lequel R est le radical éthylène.

8. Procédé selon la revendication 6 ou 7, dans lequel un progéniteur du métallate d'amine polymère est l'isopropoxyde d'aluminium et celui-ci est présent en excès stoechiométrique relativement à l'amine.

9. Procédé selon l'une quelconque des revendications 6 à 8, dans lequel on revêt le pigment du métallate d'amine polymère en mélangeant au pigment les progéniteurs du métallate d'amine polymère dans un broyeur à énergie de fluide à une température de 150 à 350°C pour faire réagir ces

progéniteurs entre eux et former un métallate polymère tel que défini à la revendication 1, fixé au pigment substrat.

10. Procédé selon l'une quelconque des revendications 6 à 9, dans lequel on revêt le pigment du métallate d'amine polymère en mélangeant le polymère au pigment dans un broyeur à énergie de fluide en présence de vapeur d'eau à une température de 150 à 350°C.

11. Composition de revêtement de surfaces qui comprend une phase continue contenant un polymère filmogène et un pigment dispersé dans celui-ci, le pigment comprenant un pigment revêtu selon l'une quelconque des revendications 1 à 5.